(19) Europäisches Patentamt
European Patent Office
Office européen des brevets

(11) **EP 1 676 151 B1**

(12) **FASCICULE DE BREVET EUROPEEN**

(45) Date de publication et mention de la délivrance du brevet:
**25.01.2017 Bulletin 2017/04**

(21) Numéro de dépôt: **04805256.7**

(22) Date de dépôt: **21.10.2004**

(51) Int Cl.:
*G01S 17/95* $^{(2006.01)}$    *G01S 13/95* $^{(2006.01)}$

(86) Numéro de dépôt international:
**PCT/FR2004/002692**

(87) Numéro de publication internationale:
**WO 2005/040853 (06.05.2005 Gazette 2005/18)**

(54) **PROCEDE POUR L'ESTIMATION DES CARACTERISTIQUES D'UNE PRECIPITATION**

VERFAHREN ZUR SCHÄTZUNG VON PRÄZIPITATIONS-EIGENSCHAFTEN

METHOD FOR ESTIMATING PRECIPITATION CHARACTERISTICS

(84) Etats contractants désignés:
**AT BE BG CH CY CZ DE DK EE ES FI FR GB GR HU IE IT LI LU MC NL PL PT RO SE SI SK TR**

(30) Priorité: **21.10.2003 FR 0312299**

(43) Date de publication de la demande:
**05.07.2006 Bulletin 2006/27**

(73) Titulaire: **CENTRE NATIONAL DE LA RECHERCHE SCIENTIFIQUE - CNRS**
**75016 Paris 16 (FR)**

(72) Inventeurs:
• **TESTUD, Jacques**
  **F-75017 Paris (FR)**
• **NEY, Richard**
  **F-94210 La Varenne Saint-Hilaire (FR)**
• **LE BOUAR, Erwan**
  **F-75018 Paris (FR)**

(74) Mandataire: **Novagraaf Technologies**
**Bâtiment O2**
**2, rue Sarah Bernhardt**
**CS90017**
**92665 Asnières-sur-Seine Cedex (FR)**

(56) Documents cités:
**EP-A- 1 049 944        WO-A-03/007016**
**US-A1- 2003 025 627**

• **PATENT ABSTRACTS OF JAPAN vol. 015, no. 084 (P-1172), 27 février 1991 (1991-02-27) & JP 02 300692 A (JAPAN RADIO CO LTD), 12 décembre 1990 (1990-12-12)**

**Description**

La présente invention concerne un procédé pour l'estimation des caractéristiques d'une précipitation, et en particulier du taux précipitant pour une précipitation solide.

On connaît dans l'état de la technique l'utilisation des caractéristiques d'une image radar pour estimer les caractéristiques pluviométriques. En particulier, le brevet européen EP1049944 décrit une technique pour l'estimation de pluie avec un radar. Selon ce brevet, on réalise les étapes suivantes :

- on mesure, au moyen dudit radar bipolaire, sur un intervalle [ro, ri] donné de rayon de trajet par rapport audit radar, la phase différentielle (Φdp et la réflectivité apparente Z. selon au moins l'une des polarisations H ou V ;
- on détermine une estimation de la valeur No* représentative de la distribution dimensionnelle des gouttes de pluie, à partir de la différence de la phase différentielle entre ro et ri et à partir d'une intégrale d'une fonction de la réflectivité apparente Z, le long de l'intervalle [ro, ri] ;
- on déduit la valeur du taux de précipitation en un point à partir de No* et de la réflectivité apparente en ce point.

On connaît également un procédé pour l'estimation de pluie décrit dans le brevet PCT WO03007016 décrivant un procédé pour l'estimation d'un taux précipitant au moyen d'un radar bipolaire, caractérisé par les différentes étapes suivantes:

- on mesure au moyen dudit radar bipolaire, sur un intervalle [rl, r0] donné de rayon r de trajet par rapport audit radar, la phase différentielle Φdp et la réflectivité atténuée Z selon au moins l'une des polarisations H ou V ;
- on détermine une estimation de la valeur K(r0) de l'atténuation spécifique en r0 à partir du profil de réflectivité atténuée ainsi mesuré, ainsi qu'à partir de la différence de la phase différentielle entre r0 et r1; on détermine une estimation K(r) de l'atténuation spécifique en r en fonction de l'atténuation K(r0) ainsi déterminée et du profil de réflectivité atténuée Z(r); on détermine le taux de précipitant R(r) connaissant K(r).

Ces différentes solutions permettent de caractériser des précipitations liquides et d'estimer de façon précise le taux de pluie (en mm/h), mais pas d'estimer les caractéristiques des précipitations solides telles que la neige.

L'invention concerne deux nouveaux procédés visant à remédier à cet inconvénient.

Cet objectif est résolu par un procédé pour l'estimation d'une précipitation solide conforme aux revendications 1 et 12.

Notamment le procédé estime le taux précipitant pour une précipitation solide. Il comporte une étape d'acquisition d'une image radar comportant au moins un plan vertical d'une zone de précipitation et d'un traitement d'un profil vertical pour fournir des signaux numériques représentatifs de la réflectivité selon la direction verticale h caractérisé en ce que l'on réalise une étape d'intégration desdits signaux représentatifs de la réflectivité pour délivrer un signal représentatif du profil dans le plan vertical du diamètre moyen des particules pondéré par la masse de chaque particule, et une étape de détermination de la concentration des particules solides à partir des signaux calculés dans les étapes précédentes.

De préférence, l'étape d'intégration consiste à déterminer la variable Z(h) l'observable radar en mm$^6$/m$^3$ en fonction de l'altitude h à partir de ladite image radar, et à déterminer ledit diamètre moyen des particules Dm(h) par résolution de l'équation :

$$\frac{\partial D_m}{\partial h} = -0,25 k_{eff} a D_m^{b-5} 10^{-18} Z + \left(\frac{1}{6}\frac{1}{Z}\frac{\partial Z}{\partial h}\right) D_m \quad (2)$$

où :

- Z est l'observable radar à inverser en mm$^6$m$^{-3}$ ;
- $D_m$ est en m ;
- $a$ et b sont des coefficients spécifiques des particules de type « agrégats ». Le coefficient a est par exemple égal à 35184 et le coefficient b est égal à 3,16.
- $k_{eff}$ est le coefficient d'efficacité du processus d'agrégation à ajuster, ce coefficient $k_{eff}$ étant par exemple égal à 0,3

L'intégration de (2) nécessite une condition à la limite d'intégration. Avantageusement, ladite condition à la limite d'intégration est déterminée afin que la valeur D$_m$(h) au sommet du nuage corresponde à la valeur prédéterminée du nombre total de particules au sommet du nuage.

Selon un mode de réalisation avantageux, on détermine le profil du nombre total de particules n$_t$(h) par l'équation

suivante :

$$n_T(h) = x \cdot Z(h) / D_m(h)^6$$

où x est égal à 25,4 $10^{-18}$

Selon un autre mode de réalisation, on détermine le paramètre météorologique $N_0(h)$ par l'équation suivante :

$$N_0(h) = y \cdot Z(h) / D_m(h)^7$$

Où y est égal à 102 $10^{-18}$

Selon un troisième mode de mise en oeuvre, 1 on détermine le paramètre météorologique correspondant au profil du contenu en glace $IWC(h)$ [en g/m$^3$] par l'équation suivants :

$$IWC(h) = wZ(h) / D_m(h)^3$$

où w est égal à 1,25 $10^{-12}$

Selon un quatrième mode de mise en oeuvre, on détermine le paramètre météorologique correspondant au profil du taux précipitant $R(h)$ solide (mm/h équivalent fondu) par l'équation suivante :

$$R(h) = r \cdot Z(h) / D_m(h)^{2,35}$$

Où r est égal à 4,698 $10^{-10}$

L'invention sera mieux comprise à la lecture de la description qui suit, se référant à un exemple non limitatif de réalisation.

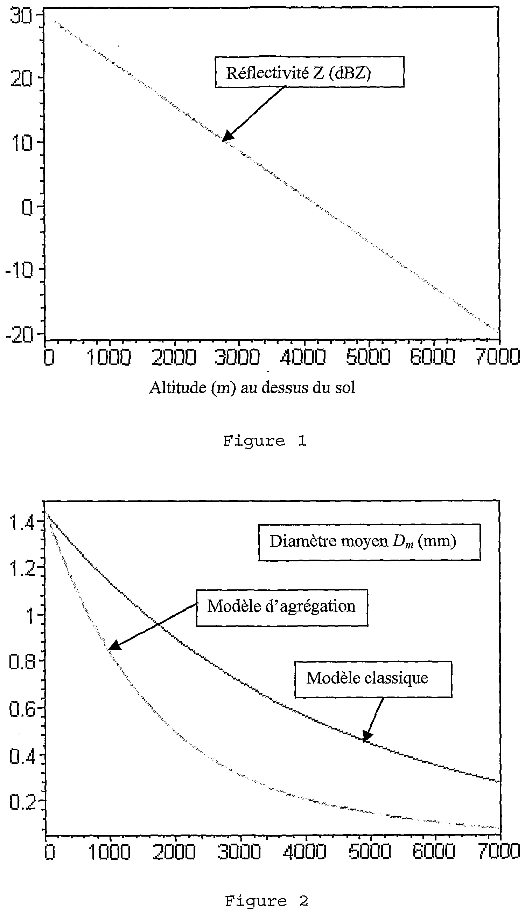

- La figure 1 représente un exemple de profil vertical de Z à inverser (dans cet exemple, l'isotherme 0°C est au niveau du sol).
- La figure 2 représente la comparaison du profil de Dm résultant de l'inversion de Z par le modèle d'agrégation avec l'estimateur classique.

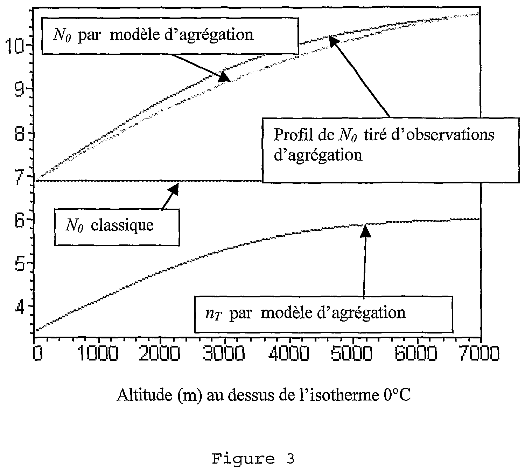

- La figure 3 représente la comparaison des profils de N0 et nT résultant de l'inversion de Z par le modèle d'agrégation avec l'hypothèse classique et des observations.
- La figure 4 représente le profil vertical de Z à inverser
- La figure 5 représente la comparaison du profil de Dm résultant de l'inversion de Z par le modèle d'agrégation avec l'estimateur classique.
- La figure 6 représente la comparaison des profils de N0 et nT résultant de l'inversion de Z par le modèle d'agrégation avec l'hypothèse classique et des observations.
- La figure 7 représente la comparaison du profil de R résultant de l'inversion de Z par le modèle d'agrégation avec l'estimateur classique.
- La figure 8 représente la sensibilité de la restitution du taux précipitant équivalent (mm/h) à la loi de densité des particules $\rho(D) \propto D^{-\gamma}$.
- La figure 9 représente la sensibilité de la restitution de la vitesse Doppler verticale à la loi de densité des particules $p(D) \propto D^{-\gamma}$.

Le procédé s'applique essentiellement aux précipitations stratiformes. Il considère que les noyaux glaçogènes ne sont activés qu'à température fortement négative, c'est-à-dire au sommet du nuage. Les cristaux de glace formés à haute altitude sédimentent et grossissent au cours de leur chute soit par sublimation de la vapeur d'eau saturante ambiante, soit par collection et givrage de gouttelettes d'eau nuageuse surfondues, soit par agrégation au hasard de leurs collisions avec d'autres cristaux de glace. Des trois processus de croissance, seule l'agrégation change la concentration en particules de glace. Le procédé de caractérisation repose essentiellement sur une description simplifiée du mécanisme d'agrégation. L'invention est basée sur une classe de procédés « profileurs », en ce sens qu'elle inverse le profil vertical de réflectivité mesuré dans la glace, pour en tirer le profil vertical du taux précipitant solide.

Les étapes de la méthode d'inversion sont les suivantes :

1- La distribution dimensionnelle des particules exprimée en « diamètre équivalent fondu », est supposée exponentielle i.e. :

$$N(D) = N_0 \exp(-4D/Dm) \quad (1)$$

où $N(D)$ est la concentration en particules par m$^3$ et par intervalle de diamètre, et $N_0$ et $D_m$ sont les deux paramètres qui caractérisent la distribution.

2- On détermine le sommet $h_{max}$ et la base $h_{min}$ de la couche de précipitation solide.

 a. $h_{max}$ est l'altitude maximum du profil de réflectivité mesuré $Z(h)$.
 b. $h_{min}$ est soit l'altitude de l'isotherme 0°C si la température au sol est positive, soit le niveau du sol si la température au sol est négative.

3- On détermine alors le profil du paramètre $D_m(h)$ entre $h_{max}$ et $h_{min}$ en résolvant l'équation différentielle :

$$\frac{\partial D_m}{\partial h} = -0.25 k_{eff} a D_m^{b-5} 10^{-18} Z + \left( \frac{1}{6} \frac{1}{Z} \frac{\partial Z}{\partial h} \right) D_m \quad (2)$$

où :

-  Z est l'observable radar à inverser en mm$^6$m$^{-3}$ ;
-  $D_m$ est en m ;
-  a et $b$ sont des coefficients spécifiques des particules de type « agrégats », égaux respectivement à 35184 et 3,16 à partir des observations de Locatelli et Hobbs (1974) ;
-  $k_{eff}$ est le coefficient d'efficacité du processus d'agrégation à ajuster (la valeur $k_{eff}$ = 0,3 semble correcte).

4- L'intégration de (2) s'effectue à partir du haut, où la condition à la limite s'exprime en fixant le nombre total de particules $n_T$ (ou nombre de noyaux glaçogènes activés au sommet de nuage). On peut prendre $n_T (h_{max})$ = 10$^6$ m$^{-3}$, ce qui permet d'exprimer la condition à la limite $D_m(h_{max})$ comme :

$$Dm(H_{max}) = 25{,}4 \; 10^{-18} \; (Z(h_{max})/n_T(h_{max}))^{1/6} \quad (3)$$

5- Le profil $D_m(h)$ entre $h_{max}$ et $h_{min}$ une fois déterminé, on calcule les profils des autres paramètres d'intérêt par les expressions suivantes :

 a. Profil de $N_0$ : $N_0(h) = 102.10^{-12} Z(h)/D_m(h)^7$
 b. Profil du nombre total de particules $n_T(h)$ [en m$^{-3}$] : $N_T(h) = 102.10^{12} Z(h)/D_m(h)^6$
 c. Profil du contenu en glace $IWC(h)$ [en g/m$^3$] : $IWC(h) = 1{,}25.10^{-12} Z(h)/D_m(h)^3$
 d. Profil du taux précipitant $R(h)$ solide (mm/h équivalent fondu)

En utilisant la loi de vitesse terminale de chute déterminée par Locatelli and Hobbs pour des agrégats: [$v_T$ =107.6 $D^{0.65}$ (D in m)], R(h) s'exprime par :

$$R(h) = 4{,}698.10^{-10} Z(h)/D_m(h)^{2{,}35}$$

La description qui suit concerne une autre version du procédé de traitement pour la détermination du taux précipitant.

Pour la pluie, l'algorithme utilisé est l'algorithme ZPHI objet des brevets FR9800714 et FR0109206.

Pour les précipitations solides, le nouvel algorithme qui vient d'être développé est l'objet de la description qui suit.

Cet algorithme d'estimation du taux précipitant pour une précipitation solide fait partie de la classe des algorithmes « profileurs », en ce sens qu'il inverse le profil vertical de réflectivité mesuré dans la glace, pour en tirer le profil vertical du taux précipitant solide.

L'algorithme s'applique essentiellement aux précipitations stratiformes. Il considère que les noyaux glaçogènes ne sont activés qu'à température fortement négative, c'est-à-dire au sommet du nuage. Les cristaux de glace formés à haute altitude sédimentent et grossissent au cours de leur chute soit par sublimation de la vapeur d'eau saturante ambiante, soit par collection et givrage de gouttelettes d'eau nuageuse surfondues, soit par agrégation au hasard de leurs collisions avec d'autres cristaux de glace. Des trois processus de croissance, seule l'agrégation change la concentration en particules de glace. L'algorithme repose essentiellement sur une description simplifiée du mécanisme d'agrégation. Les étapes de la méthode d'inversion sont les suivantes :

La distribution dimensionnelle des particules exprimée en « diamètre équivalent fondu », est supposée exponentielle i.e. :

$$N(D) = N_0 \exp(-4D/D_m) , \qquad (1)$$

où:

- D est le diamètre équivalent fondu de la particule de glace,
- $N(D)$ est la concentration en particules par $m^3$ et par intervalle de diamètre,
- et $N_0$ et $D_m$ sont les deux paramètres qui caractérisent la distribution.

On détermine le sommet $h_{max}$ et la base $h_{min}$ de la couche de précipitation solide.

- $h_{max}$ est l'altitude maximale du profil de réflectivité mesuré $Z(h)$.
- $h_{min}$ est soit l'altitude de l'isotherme 0°C si la température au sol est positive, soit le niveau du sol si la température au sol est négative.

On détermine alors le profil du paramètre $D_m(h)$ entre $h_{max}$ et $h_{min}$ en résolvant l'équation différentielle, dont la solution peut être déterminée analytiquement :

$$\frac{\partial D_m}{\partial h} = -24 \frac{4^d}{\Gamma(4+d)} \frac{k_{eff} J(b,d) a}{\acute{a}(\hat{a}-1)} Z D_m^{b-(\hat{a}-2)} + \frac{1}{(\hat{a}-1)Z} \frac{\partial Z}{\partial h} D_m \qquad (2)$$

où :

$$J(b,d) = \int_0^\infty \exp(-4x) x^b \int_0^x \left[ x^d - x'^d \right] \exp(-4x') \, dx' dx \quad \text{décrit la fréquence de collision}$$

- Z est l'observable radar à inverser en $mm^6 m^3$ ;
- $D_m$ est en m ;
- a, b, c et d sont des coefficients dépendant de la loi de densité F(D) des particules de glace, supposée varier en $D^{-\gamma}$ (où $\gamma$ peut prendre des valeurs entre 0.25 et 1.1 suivant le type des particules). Ces coefficients sont tirés de la théorie de Mitchell (Journal of Atmospheric Sciences, 53, 12, 1996) pour représenter les lois puissance suivantes :

$v_t(D) = cD^d$ (où $v_t$ est la vitesse terminale de chute de la particule de diamètre équivalent fondu D)
$A = aD^b$ (où A est la section efficace de la particule de diamètre équivalent fondu D)

Avec des coefficients dépendant de la fréquence et d'une fonction de (D), représentant par une loi puissance la relation entre la réflectivité (paramètre mesuré), la concentration des particules et leur diamètre équivalent moyen :

$$Z = \acute{a} N_0 D_m^{\hat{a}}$$

$k_{eff}$ est le coefficient d'efficacité du processus d'agrégation à ajuster (la valeur $k_{eff} = 0.3$ semble correcte juste au-dessus de l'isotherme 0°C).
L'intégration de (2) s'effectue à partir du haut, où la condition à la limite s'exprime en fixant le nombre total de particules $n_T$ (ou nombre de noyaux glaçogènes activés au sommet de nuage). On peut prendre $n_T(h_{max}) = 10^6$ m$^{-3}$, ce

qui permet d'exprimer la condition à la limite $D_m(h_{max})$ comme :

$$D_m(h_{\max}) = \left[\frac{1}{4\acute{a}}\frac{Z(h_{\max})}{n_T(h_{\max})}\right]^{\frac{1}{\hat{a}-1}} \quad (3)$$

Le profil $D_m(h)$ entre $h_{max}$ et $h_{min}$ une fois déterminé, on calcule les profils des autres paramètres d'intérêt par les expressions suivantes :

Profil de $N_0$ :

$$N_0(h) = \frac{Z(h)}{\acute{a}D_m(h)^{\hat{a}}}$$

Profil du nombre total de particules $n_T(h)$ [en m$^{-3}$]

$$n_T(h) = 0.25\,N_0(h)\,D_m(h)$$

Profil du contenu en glace $IWC(h)$ [en g/m$^3$]

$$IWC(h) = (1.2272)10^4\,N_0(h)\,D_m(h)^4$$

Profil du taux précipitant $R(h)$ solide (mm/h équivalent fondu) :

$$R(h) = (1.885)10^6\,c\,\frac{\Gamma(4+d)}{4^{(4+d)}}N_0(h)\,D_m(h)^{(4+d)}$$

Profil vertical de la vitesse Doppler $V_D(h)$ (en m/s), donnée par une loi puissance dépendant de la densité $\_(D)$ :

$$V_D(h) = p\,D_m(h)^q$$

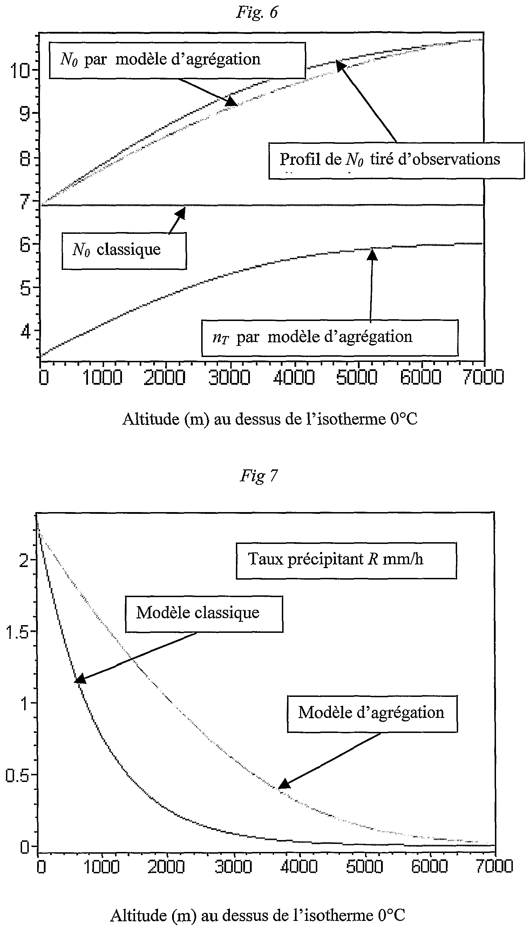

Du fait de la dépendance des coefficients vis-à-vis de la loi de densité $F(D)$, la restitution du taux précipitant dépend de façon critique du paramètre $\gamma$, comme en témoigne la figure 7. Cette loi de densité constitue donc un paramètre clef.

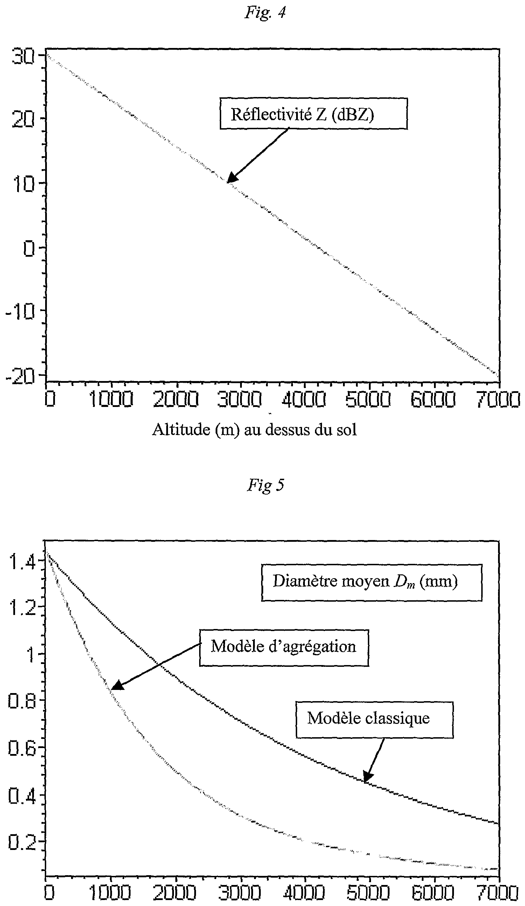

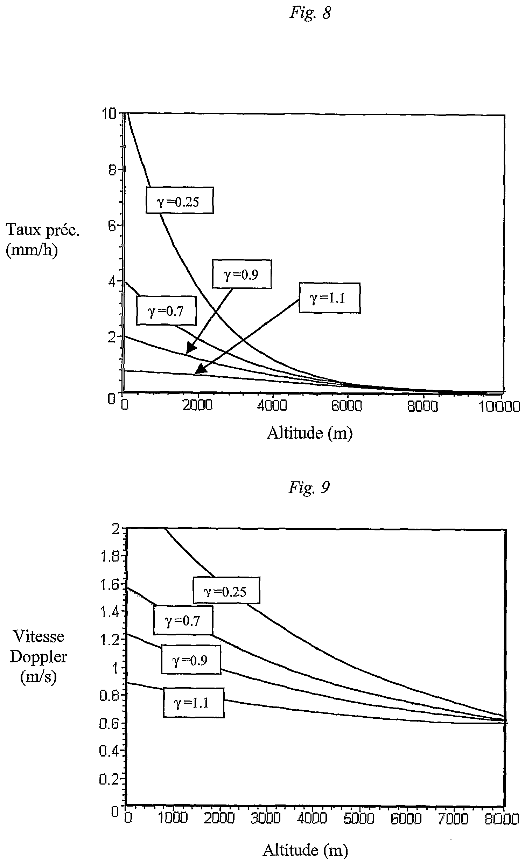

En opérant en tir vertical, on peut mesurer la vitesse Doppler $V_D(h)$, et la comparer au $V_D(h)$ calculé par l'algorithme. Le profil de vitesse Doppler est discriminant, comme en témoigne la figure 8. Par ajustements successifs, on peut ainsi déterminer le paramètre $\gamma$ de la loi F(D) pour lequel la cohérence entre $V_D(h)$ calculée et $V_D(h)$ mesurée est réalisée. La figure 4 représente un exemple de profil inversé par l'algorithme (dans cet exemple, l'isotherme 0°C est au niveau du sol). La figure 5 représente les courbes résultant de l'application du modèle d'agrégation et du modèle classique, permettant la comparaison du profil de $D_m$ résultant de l'inversion de $Z$ par le modèle d'agrégation avec l'estimateur classique.

La figure 6 représente la courbe des profils en fonction de l'altitude (m) au-dessus de l'isotherme 0°C. Elle conduit à la comparaison des profils de $N_0$ et $n_T$ résultant de l'inversion de $Z$ par le modèle d'agrégation avec l'hypothèse classique et des observations. La figure 7 représente la comparaison du profil de $R$ résultant de l'inversion de $Z$ par le modèle d'agrégation avec l'estimateur classique. La figure 8 représente la sensibilité de la restitution du taux précipitant équivalent (mm/h) à la loi de densité des particules $\rho(D) \propto D^{-\gamma}$. La figure 9 représente la sensibilité de la restitution de la vitesse Doppler verticale à la loi de densité des particules $\rho(D) \propto D^{-\gamma}$.

**Revendications**

1.  Procédé pour l'estimation des caractéristiques d'une précipitation solide de particules s'agrégeant, comportant une étape d'acquisition d'une image radar comportant au moins un plan vertical d'une zone de précipitation et de traitement d'un profil vertical pour fournir des signaux numériques représentatifs de la réflectivité selon la direction verticale z,
    une étape de détermination de la concentration des particules solides,
    **caractérisé en ce qu'**il comprend, en outre,
    une étape de détermination d'un profil, dans le plan vertical, du diamètre moyen $D_m$(h) des particules pondéré par la masse de chaque particule, ladite étape de détermination de profil comprenant une étape d'intégration pour délivrer un signal représentatif dudit profil du diamètre moyen,
    ladite étape de détermination de la concentration des particules solides étant effectuée à partir des signaux calculés dans les étapes précédentes,
    dans lequel ladite intégration consiste à déterminer la variable Z(h) représentant l'observable radar en mm$^6$/m$^3$ en fonction de l'altitude h à partir de ladite image radar, et
    ladite détermination du profil de diamètre moyen des particules $D_m$(h) est effectuée par résolution de l'équation :

$$\frac{\partial D_m}{\partial h} = -0,25 k_{eff} a D_m^{b-5} 10^{-18} Z + \left( \frac{1}{6} \frac{1}{Z} \frac{\partial Z}{\partial h} \right) D_m \quad (2)$$

où :

- Z est l'observable radar à inverser en mm$^6$m$^{-3}$ ;
- $D_m$ est en m ;
- a et b sont des coefficients spécifiques des particules de type « agrégats » ;
- $k_{eff}$ est le coefficient d'efficacité du processus d'agrégation à ajuster.

2.  Procédé selon la revendication 1, **caractérisé en ce que** le coefficient a est égal à 35184.

3.  Procédé selon la revendication 1 ou 2, **caractérisé en ce que** le coefficient b est égal à 3,16.

4.  Procédé selon l'une quelconque des revendications précédentes, **caractérisé en ce que** l'on détermine le profil du nombre total de particules $n_t$(h) par l'équation suivante :

$$n_T(h) = x \cdot Z(h) / D_m(h)^6.$$

5.  Procédé selon la revendication précédente, **caractérisé en ce que** x est égal à 25,4.10$^{-18}$.

6.  Procédé selon l'une quelconque des revendications précédentes, **caractérisé en ce que** l'on détermine le paramètre météorologique $N_0$(h) par l'équation suivante :

$$N_0(h) = y \cdot Z(h) / D_m(h)^7.$$

7.  Procédé selon la revendication précédente, **caractérisé en ce que** y est égal à 102.10$^{-18}$.

8.  Procédé selon l'une quelconque des revendications précédentes, **caractérisé en ce que** l'on détermine le paramètre météorologique correspondant au profil du contenu en glace *IWC*(*h*) [en g/m$^3$] par l'équation suivante :

$$IWC(h) = w \cdot Z(h) / D_m(h)^3.$$

9.  Procédé selon la revendication précédente, **caractérisé en ce que** w est égal à 1,25.10$^{12}$.

10. Procédé selon l'une quelconque des revendications précédentes, **caractérisé en ce que** l'on détermine le paramètre météorologique correspondant au profil du taux précipitant R(h) solide (mm/h équivalent fondu) par l'équation suivante :

$$R(h) = r.Z(h)/D_m(h)^{2,35}.$$

11. Procédé selon la revendication précédente, **caractérisé en ce que** r est égal à $4,698.10^{-10}$.

12. Procédé pour l'estimation des caractéristiques d'une précipitation solide de particules s'agrégeant, comportant une étape d'acquisition d'une image radar comportant au moins un plan vertical d'une zone de précipitation et de traitement d'un profil vertical pour fournir des signaux numériques représentatifs de la réflectivité selon la direction verticale z,
une étape de détermination de la concentration des particules solides,
**caractérisé en ce qu'**il comprend, en outre,
une étape de détermination d'un profil, dans le plan vertical, du diamètre moyen $D_m(h)$ des particules pondéré par la masse de chaque particule, ladite étape de détermination de profil comprenant une étape d'intégration pour délivrer un signal représentatif dudit profil du diamètre moyen,
ladite étape de détermination de la concentration des particules solides étant effectuée à partir des signaux calculés dans les étapes précédentes,
dans lequel ladite intégration consiste à déterminer la variable Z(h) représentant l'observable radar en $mm^6/m^3$ en fonction de l'altitude h à partir de ladite image radar,
ladite détermination du profil de diamètre moyen des particules $D_m(h)$ est effectuée par résolution de l'équation :

$$\frac{\partial D_m}{\partial h} = -24 \frac{4^d}{\Gamma(4+d)} \frac{k_{eff} J(b,d) a}{\alpha (\beta-1)} Z D_m^{b-(\beta-2)} + \frac{1}{(\beta-1)Z} \frac{\partial Z}{\partial h} D_m \qquad (2')$$

où :

$$J(b, d) = \int_0^\infty exp\,(-4x)\,x^b \int_0^x [x^d - x'^d]\, exp\,(-4x')\, dx'\, dx \quad \text{décrit la fréquence de collision}$$

- Z est l'observable radar à inverser en $mm^6 m^3$ ;
- $D_m$ est en m ;
- a, b, c et d sont des coefficients dépendant d'une loi de densité F(D) des particules de glace ;
- à et à sont des paramètres ;
- $k_{eff}$ est le coefficient d'efficacité du processus d'agrégation à ajuster.

13. Procédé selon la revendication précédente, **caractérisé en ce que** l'on détermine le paramètre météorologique $N_0(h)$ par l'équation suivante :

$$N_0(h) = \frac{Z(h)}{\alpha D_m(h)^\beta}\ .$$

14. Procédé selon la revendication 13, **caractérisé en ce que** l'on détermine le profil du nombre total de particules $n_t(h)$ par l'équation suivante :

$$n_T(h) = 0,25\ N_0(h)\ D_m(h).$$

15. Procédé selon la revendication 13 ou 14, **caractérisé en ce que** l'on détermine le paramètre météorologique correspondant au profil du contenu en glace *IWC(h)* [en $g/m^3$] par l'équation suivante :

$$IWC(h) = (1,2272).10^4\ N_0(h)\ D_m(h)^4.$$

16. Procédé selon l'une des revendications 13 à 15, **caractérisé en ce que** l'on détermine le paramètre météorologique correspondant au profil du taux précipitant R(h) solide (mm/h équivalent fondu) par l'équation suivante :

$$R(h) = (1,885) \cdot 10^6 \; c \; \frac{\Gamma(4+d)}{4^{(4+d)}} \; N_0(h) \; D_m(h)^{(4+d)} \; .$$

17. Procédé selon l'une quelconque des revendications précédentes, **caractérisé en ce que** le coefficient $k_{eff}$ est égal à 0,3.

18. Procédé selon l'une quelconque des revendications précédentes, **caractérisé en ce que** ladite constante d'intégration est déterminée afin que la valeur $D_m(h)$ au sommet du nuage corresponde à la valeur prédéterminée du nombre total de particules au sommet du nuage.

19. Procédé selon la revendication 12, dans lequel les coefficients *a, b, c et d* dépendent d'une loi de densité des particules de glace *F(D)* variant en $D^{-\gamma}$, $\gamma$ étant un paramètre compris entre 0,25 et 1,1.

**Patentansprüche**

1. Verfahren zum Schätzen der Eigenschaften eines festen Niederschlags von Partikeln, die sich aggregieren, umfassend:

   einen Schritt des Erfassens eines Radarbildes, umfassend mindestens eine vertikale Ebene eines Niederschlagsbereichs und der Behandlung eines vertikalen Profils, um digitale Signale zu liefern, die die Reflektivität gemäß der vertikalen Richtung z darstellen,
   einen Schritt des Bestimmens der Konzentration der festen Partikel,

   **dadurch gekennzeichnet, dass** es außerdem Folgendes umfasst:

   einen Schritt des Bestimmens eines Profils in der vertikalen Ebene des mittleren Durchmesser $D_m$ (h) der Partikel, gewichtet durch die Masse jedes Partikels, wobei der Schritt des Bestimmens des Profils einen Schritt des Integrierens umfasst, um ein Signal zu liefern, das das Profil des mittleren Durchmessers darstellt,
   wobei der Schritt des Bestimmens der Konzentration der festen Partikel ausgehend von den Signalen erfolgt, die in den vorhergehenden Schritten berechnet wurden,
   wobei die Integration darin besteht, die Variable Z (h) zu bestimmen, die die Radarobservable in mm$^6$/m$^3$ je nach der Höhe h ausgehend vom Radarbild darstellt, und
   die Bestimmung des Profils des mittleren Durchmessers der Partikel $D_m(h)$ durch die Lösung der folgenden Gleichung erfolgt:

$$\frac{\partial D_m}{\partial h} = -0,25 k_{eff} a D_m^{b-5} 10^{-18} Z + \left( \frac{1}{6} \frac{1}{Z} \frac{\partial Z}{\partial h} \right) D_m \quad (2)$$

   wobei:

   - Z die zu invertierende Radarobservable in mm$^6$m$^{-3}$ ist;
   - $D_m$ in m ist;
   - a und b spezifische Koeffizienten der Partikel vom Typ "Aggregate" sind;
   - $k_{eff}$ der Effizienzkoeffizient der Leistungsfähigkeit des einzustellenden Aggregationsprozesses ist.

2. Verfahren nach Anspruch 1, **dadurch gekennzeichnet, dass** der Koeffizient a gleich 35184 ist.

3. Verfahren nach Anspruch 1 oder 2, **dadurch gekennzeichnet, dass** der Koeffizient b gleich 3, 16 ist.

4. Verfahren nach einem der vorhergehenden Ansprüche, **dadurch gekennzeichnet, dass** das Profil der Gesamtzahl der Partikel $n_t(h)$ durch die folgende Gleichung bestimmt wird:

$$n_T(h) = x \cdot Z(h) / D_m(h)^6.$$

**5.** Verfahren nach dem vorhergehenden Anspruch, **dadurch gekennzeichnet, dass** x gleich $25{,}4 \cdot 10^{-18}$ ist.

**6.** Verfahren nach einem der vorhergehenden Ansprüche, **dadurch gekennzeichnet, dass** der meteorologische Parameter $N_0(h)$ durch die folgende Gleichung bestimmt wird:

$$N_0(h) = y \cdot Z(h) / D_m(h)^7.$$

**7.** Verfahren nach dem vorhergehenden Anspruch, **dadurch gekennzeichnet, dass** y gleich $102 \cdot 10^{-18}$ ist.

**8.** Verfahren nach einem der vorhergehenden Ansprüche, **dadurch gekennzeichnet, dass** der meteorologischen Parameter, der dem Profil des Eisgehalts *IWC(h)* [in g/m$^3$] entspricht, durch die folgende Gleichung bestimmt wird:

$$IWC(h) = w \cdot Z(h) / D_m(h)^3.$$

**9.** Verfahren nach dem vorhergehenden Anspruch, **dadurch gekennzeichnet, dass** w gleich $1{,}25 \cdot 10^{-12}$ ist.

**10.** Verfahren nach einem der vorhergehenden Ansprüche, **dadurch gekennzeichnet, dass** der meteorologische Parameter, der dem Profil der festen Niederschlagsrate R (h) (mm/h geschmolzenes Äquivalent) entspricht, durch die folgende Gleichung bestimmt wird:

$$R(h) = r \cdot Z(h) / D_m(h)^{2,35}.$$

**11.** Verfahren nach dem vorhergehenden Anspruch, **dadurch gekennzeichnet, dass** r gleich $4{,}698 \cdot 10^{-10}$ ist.

**12.** Verfahren zum Schätzen der Eigenschaften eines festen Niederschlags von Partikeln, die sich aggregieren, umfassend:

einen Schritt des Erfassens eines Radarbildes, das mindestens eine vertikale Ebene eines Bereichs der Ausfällung und der Behandlung eines vertikalen Profils umfasst, um digitale Signale zu liefern, die die Reflektivität gemäß der vertikalen Richtung z darstellen,
einen Schritt des Bestimmens der Konzentration der festen Partikel,

**dadurch gekennzeichnet, dass** es außerdem Folgendes umfasst:

einen Schritt des Bestimmens eines Profils in der vertikalen Ebene des mittleren Durchmessers $D_m(h)$ der Partikel, gewichtet durch die Masse jedes Partikels, wobei der Schritt des Bestimmens des Profils einen Schritt des Integrierens umfasst, um ein Signal zu liefern, das das Profil des mittleren Durchmessers darstellt,
wobei der Schritt des Bestimmens der Konzentration der festen Partikel ausgehend von den Signalen erfolgt, die in den vorhergehenden Schritten berechnet wurden,
wobei die Integration darin besteht, die Variable Z(h) zu bestimmen, die die Radarobservable in mm$^6$/m$^3$ je nach der Höhe h ausgehend von dem Radarbild darstellt,
die Bestimmung des Profils des mittleren Durchmessers der Partikel Dm(h) durch die Lösung der folgenden Gleichung erfolgt:

$$\frac{\partial D_m}{\partial h} \;=\; -24 \frac{4^d}{\Gamma(4+d)} \frac{k_{eff} J(b,d)\, a}{\alpha\,(\beta-1)} Z\, D_m^{\,b-(\beta-2)} \;+\; \frac{1}{(\beta-1)Z} \frac{\partial Z}{\partial h} D_m \quad (2')$$

wobei:

$$J(b,d) = \int_0^\infty exp\,(-4x)\, x^b \int_0^x \left[ x^d - x'^d \right] exp\,(-4x')\ dx'\ dx \quad \text{die Kollisionsfrequenz}$$

beschreibt

- Z die zu invertierende Radarobservable in mm$^6$m$^{-3}$ ist;
- $D_m$ in m ist;
- *a, b, c und d* Koeffizienten sind, die von einem Gesetz der Dichte (F(D) der Eispartikel abhängen,
- $\alpha$ et $\beta$ Parameter sind;
- k$_{eff}$ der Effizienzkoeffizient des einzustellenden Aggregationsprozesses ist.

**13.** Verfahren nach dem vorhergehenden Anspruch, **dadurch gekennzeichnet, dass** der meteorologische Parameter N$_0$(h) durch die folgende Gleichung bestimmt wird:

$$N_0(h) = \frac{Z(h)}{\alpha D_m(h)^\beta} \ .$$

**14.** Verfahren nach Anspruch 13, **dadurch gekennzeichnet, dass** das Profil der Gesamtzahl der Partikel n$_t$(h) durch die folgende Gleichung bestimmt wird:

$$n_T(h) \ = \ 0,25 \ N_0(h) \ D_m(h) \ .$$

**15.** Verfahren nach Anspruch 13 oder 14, **dadurch gekennzeichnet, dass** der meteorologische Parameter, der dem Profil des Eisgehalts *IWC*(*h*) [in g/m$^3$] entspricht, durch die folgende Gleichung bestimmt wird:

$$IWC(h) \ = \ (1,2272) \ . \ 10^4 \ N_0(h) \ D_m(h)^4 \ .$$

**16.** Verfahren nach einem der Ansprüche 13 bis 15, **dadurch gekennzeichnet, dass** der meteorologische Parameter, der dem Profil der festen Niederschlagsrate R(h) (mm/h geschmolzenes Äquivalent) entspricht, durch die folgende Gleichung bestimmt wird:

$$R(h) \ = \ (1,885) \ . \ 10^6 \ c \ \frac{\Gamma(4+d)}{4^{(4+d)}} \ N_0(h) \ D_m(h)^{(4+d)} \ .$$

**17.** Verfahren nach einem der vorhergehenden Ansprüche, **dadurch gekennzeichnet, dass** der Koeffizient k$_{eff}$ gleich 0,3 ist.

**18.** Verfahren nach einem der vorhergehenden Ansprüche, **dadurch gekennzeichnet, dass** die Integrationskonstante bestimmt wird, damit der Wert D$_m$(*h*)an der Spitze der Wolke dem vorbestimmten Wert der Gesamtzahl der Partikel an der Spitze der Wolke entspricht.

**19.** Verfahren nach Anspruch 12, wobei die Koeffizienten *a, b, c und d* von einem Gesetz der Dichte der Eispartikel *F(D)* abhängen, die um D-2' variieren, wobei $\gamma$ ein Parameter ist, der zwischen 0,25 und 1,1 liegt.

## Claims

**1.** A method of estimating the characteristics of a solid aggregating particles precipitation, said method comprising an acquisition step consisting in acquiring a radar image including at least a vertical plane of a precipitation zone, and in processing a vertical profile so as to deliver numerical digital signals representative of reflectivity in the vertical direction z,
a concentration determination step consisting in determining the concentration of the solid particles

said method being **characterized in that** it further comprises

a profile determination step consisting in determining the profile, in the vertical plane, of the mean particle diameter $D_m(h)$ weighted by the mass of each particle, said profile determination step including an integration step so as to deliver a signal representative of the profile of the mean diameter,

said concentration determination step consisting in determining the concentration of the solid particles being carried out on the basis of the signals computed in the preceding steps,

where

said integration step consists in determining the variable $Z(h)$ representing the radar observable in $mm^6/m^3$ as a function of the altitude h on the basis of said radar image, and said profile determination step consisting in determining the profile of the mean diameter $Dm(h)$ is carried out by resolving the following equation:

$$\frac{\partial D_m}{\partial h} = -0.25 k_{eff} a D_m^{b-5} 10^{-18} Z + \left(\frac{1}{6}\frac{1}{Z}\frac{\partial Z}{\partial h}\right) D_m \quad (2)$$

where:

- $Z$ is the radar observable to be inverted in $mm^6 m^{-3}$;
- $D_m$ is in meters (m);
- a and b are coefficients specific to particles of the "aggregate" type;
- $k_{eff}$ is the coefficient of effectiveness of the aggregation process to be adjusted.

2. A method according to claim 1, **characterized in that** the coefficient a is equal to 35184.

3. A method according to claim 1 or 2, **characterized in that** the coefficient b is equal to 3.16.

4. A method according to any one of the preceding claims, **characterized in that** the profile of the particles total number $n_t(h)$ is determined by resolving the following equation:

$$n_T(h) = x \cdot Z(h) / D_m(h)^6.$$

5. A method according to the preceding claim, **characterized in that** x is equal to $25.4.10^{-18}$.

6. A method according to any one of the preceding claims, **characterized in that** the meteorological parameter $N_0(h)$ is determined by the following equation:

$$N_0(h) = y \cdot Z(h) / D_m(h)^7.$$

7. A method according to the preceding claim, **characterized in that** y is equal to $102.10^{-18}$.

8. A method according to any one of the preceding claims, **characterized in that** the meteorological parameter corresponding to the profile of ice water content $IWC(h)$ [in $g/m^3$] is determined by the following equation:

$$IWC(h) = w \cdot Z(h) / D_m(h)^3.$$

9. A method according to the preceding claim **characterized in that** *w* is equal to $1.25\ 10^{-12}$.

10. A method according to any one of the preceding claims, **characterized in that** the meteorological parameter corresponding to the profile of the solid precipitation rate $R(h)$ (mm/h equivalent melted) is determined by the following equation:

$$R(h) = r \cdot Z(h) / D_m(h)^{2.35}.$$

**11.** A method according to the preceding claim, **characterized in that** r is equal to 4.698 10$^{-10}$.

**12.** A method of estimating the characteristics of a solid aggregating particles precipitation, comprising an acquisition step consisting in acquiring a radar image including at least a vertical plane of a precipitation zone, and in processing a vertical profile so as to deliver numerical digital signals representative of reflectivity in the vertical direction z,
a concentration determination step consisting in determining the concentration of the solid particles,
said method being **characterized in that** it further comprises
a profile determination step consisting in determining the profile, in the vertical plane, of the mean particle diameter $D_m$(h)weighted by the mass of each particle, said profile determination step including an integration step so as to deliver a signal representative of the profile of the mean diameter,
said concentration determination step consisting in determining the concentration of the solid particles being carried out on the basis of the signals computed in the preceding steps.
where
the integration step consists in determining the variable Z(h) representing the radar observable in mm$^6$/m$^3$ as a function of the altitude h on the basis of said radar image, and said profile determination step consisting in determining the profile of the mean diameter Dm(h) is carried out by resolving the following equation:

$$\frac{\partial D_m}{\partial h} = -24 \frac{4^d}{\Gamma(4+d)} \frac{k_{eff} J(b,d) a}{\alpha(\beta-1)} Z D_m^{b-(\beta-2)} + \frac{1}{(\beta-1)Z} \frac{\partial Z}{\partial h} D_m \quad (2'),$$

where

$$J(b, d) = \int_0^\infty exp(-4x) x^b \int_0^x \left[ x^d - x'^d \right] exp(-4x') \, dx' \, dx,$$

describes the collision frequency

- Z is the radar observable to be inverted in mm$^6$m$^{-3}$;
- $D_m$ is in meters (m);
- a, b, c and d are coefficients dependent on a density law F(D) of the ice water particles;
- $\alpha$ and $\beta$ are parameters;
- $k_{eff}$ is the coefficient of effectiveness of the aggregation process to be adjusted.

**13.** A method according to the preceding claim, **characterized in that** the meteorological parameter $N_0$(h) is determined by the following equation:

$$N_0(h) = \frac{Z(h)}{\alpha D_m(h)^\beta} .$$

**14.** A method according to claim 13, **characterized in that** the profile of the particles total number $n_t$(h) is determined by resolving the following equation:

$$n_T(h) = 0.25 N_0(h) D_m(h) .$$

**15.** A method according to claim 13 or 14, **characterized in that** the meteorological parameter corresponding to the profile of the ice water content IWC(h) [in g/m$^3$] is determined by resolving the following equation:

$$IWC(h) = (1.2272).10^4 N_0(h) D_m(h)^4 .$$

**16.** A method according to any one of the claims 13 to 15, **characterized in that** the meteorological parameter corresponding to the profile of the solid precipitation rate R(h) (mm/h equivalent melted)is determined by resolving the following equation:

$$R(h) = (1.885).10^6 c \frac{\Gamma(4+d)}{4^{(4+d)}} N_0(h) D_m(h)^{(4+d)} .$$

**17.** A method according to any one of preceding claims, **characterized in that** the $k_{eff}$ coefficient is equal to 0.3.

**18.** A method according to any one of preceding claims, **characterized in that** said constant of integration is determined so that the value $D_m(h)$ at the top of the cloud corresponds to the predetermined value of the particles total number at the top of the cloud.

**19.** A method according to claim 12, where the coefficients a, b, c and d depend on a density law of the ice water particles F(D) varying in $D^{-\gamma}$, $\gamma$ being a parameter comprised between 0.25 and 1.1.

Figure 1

Figure 2

Figure 3

*Fig. 4*

Altitude (m) au dessus du sol

*Fig 5*

*Fig. 6*

$N_0$ par modèle d'agrégation

Profil de $N_0$ tiré d'observations

$N_0$ classique

$n_T$ par modèle d'agrégation

Altitude (m) au dessus de l'isotherme 0°C

*Fig 7*

Taux précipitant $R$ mm/h

Modèle classique

Modèle d'agrégation

Altitude (m) au dessus de l'isotherme 0°C

*Fig. 8*

Taux préc. (mm/h) vs Altitude (m)

*Fig. 9*

Vitesse Doppler (m/s) vs Altitude (m)

**EP 1 676 151 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1049944 A
- WO 03007016 A
- FR 9800714
- FR 0109206

**Littérature non-brevet citée dans la description**

- **MITCHELL.** *Journal of Atmospheric Sciences,* 1996, vol. 53 (12